# EUROPEAN PATENT APPLICATION

(11) **EP 1 065 043 A2**
(43) Date of publication of application: **03.01.2001**
(21) Application number: 00112000.5
(22) Date of filing: 20.06.2000
(51) Int. Cl.: B29D 30/46, B29D 30/38

(54) **Method and apparatus for producing belt member**

(30) Priority: 28.06.1999 JP 18189199
(71) Applicant: THE YOKOHAMA RUBBER CO., LTD., Tokyo, 105 (JP)
(72) Inventor: Okada, Noboru, The Yokohama Rubber Co., Ltd., Hiratsuka-shi, Kanagawa-ken (JP); Take, Toshihiko, The Yokohama Rubber Co., Ltd., Hiratsuka-shi, Kanagawa-ken (JP); Hasegawa, Haruhisa, The Yokohama Rubber Co., Ltd., Hiratsuka-shi, Kanagawa-ken (JP)
(74) Representative: HOFFMANN - EITLE

(57) **Abstract**

A method of producing a belt member according to the present invention includes the steps of cutting a continuous strip material (S) to a predetermined length to form a plurality of strip pieces (S'), moving intermittently the strip pieces on a conveyor (7) in a direction crosswise to the conveying direction of the strip material, and splicing serially the strip pieces which have been appropriately arranged on the conveyor, wherein an initial end portion of the strip material is cut when the cut angle of the strip material is changed, and a cut waste (Q) generated at the time of this cutting of the initial end portion is removed from the splicing position on the conveyor by appropriate driving of the conveyor.

## Description

### Background of the Invention:

This invention relates to a method of, and an apparatus for, producing a belt member. More particularly, this invention relates to a method of, and an apparatus for, producing a belt member, both capable of removing reliably and efficiently a cut waste generated at the time of a change of the cutting angle of the strip material from the splicing position, and preventing quality of a tire using the belt member from being deteriorated.

Japanese patent application Kokai publication No. 11-99564, for example, proposes a shaping method of a belt member of a pneumatic radial tire that shapes a belt member from a plurality of strip pieces to eliminate the trouble involved in preparing various kinds of belt members. This method comprises the steps of cutting a strip material that was formed by covering a plurality of reinforcing cords with an unvulcanized rubber and has a predetermined width, to a predetermined length at a predetermined cut angle to give a plurality of strip pieces, inclining an integer number of strip pieces at a predetermined angle relative to the tire circumferential direction, and splicing both side portions of the strip pieces to shape a belt member of a length corresponding to one circumference of the tire. Since the belt member has a different cord angle in accordance with the tire specification, the cutting angle of the strip material must be changed in accordance with the tire specification.

Immediately after the cutting angle of the strip material is changed, however, a distal end portion of the strip material is left cut at the cut angle on the basis of the previous specification. Therefore, the initial end portion of the strip material must be cut once again to correspond to the new specification. When the distal end portion of the strip material is cut to cope with the new tire specification, a cut waste having various shapes (a piece discarded due to insufficient size) occurs inevitably.

If the above cut waste remain on the transport conveyor for the belt members, they mix in some cases with belt members when the latter is supplied to a tire shaping machine, and the mixture of the cut waste exerts adverse influences on tire quality. To remove manually the cut waste remaining at the splicing positions on the conveyor so as to prevent in advance this problem, large quantities of time and trouble are necessary for processing the cut waste.

### Summary of the Invention:

It is therefore an object of the present invention to provide a method of, and an apparatus for, removing efficiently and reliably a cut waste that is generated when a cut angle of a strip material is changed from the splicing position, and for preventing deterioration of quality of the product tire.

In a method of producing a belt member by cutting a continuous strip material to a predetermined length into a plurality of strip pieces, moving intermittently these strip pieces in a direction crosswise to the conveying direction of the strip material on a conveyor and serially splicing the strip pieces which have been arranged appropriately on the conveyor to form an elongated belt member, the method of producing a belt member according to the present invention for accomplishing the object described above comprises the steps of cutting an initial end portion of the strip material when the cut angle of the strip material is changed, and removing a cut waste formed at the time of cutting the initial end portion from the splicing position on the conveyor by driving the conveyor.

In an apparatus for producing a belt member including a cutter for cutting with bias an elongated strip material, a conveyor for conveying a plurality of strip pieces formed by cutting the strip material in a direction crosswise to the conveying direction of the strip material, and a splicing apparatus for serially splicing the strip pieces appropriately arranged on the conveyor, the apparatus for producing a belt member according to the present invention is characterized in that the conveyor removes a cut waste generated when an initial end portion of the strip material is cut from the splicing position on the conveyor.

The present invention can automatically remove the cut waste generated when the cut angle of the strip material is changed from the splicing position of the strip pieces through appropriate driving of the conveyor without manual work. Therefore, the present invention can prevent the cut waste of the strip material from being erroneously supplied to a tire shaping machine, and can produce a high quality tire.

In the present invention, the conveyor is preferably so constituted as to be capable of rotating both normally and in reverse so that the strip pieces can be conveyed by normal driving of the conveyor and the cut waste can be removed by the reverse driving of the conveyor. In this case, the cut waste can be removed more reliably and more efficiently.

### Brief Description of the Drawings:

Fig. 1 is a schematic plan view showing an production apparatus carrying out a production method of a belt member according to an embodiment of the present invention;
Fig. 2 is a schematic side view of an arranging/splicing apparatus of the strip material in the production apparatus shown in Fig. 1;
Fig. 3 is a schematic plan view showing a strip material and strip pieces obtained by cutting the strip material;
Fig. 4(a) is a plane view showing an initial end portion of the strip material at a cutting angle α;
Fig. 4(b) is a plane view showing an initial end portion of the strip material at a cutting angle β; and
Fig. 4(c) is a plane view showing a cut waste generated when the cut angle is changed.

### Detailed Description of the Preferred Embodiments:

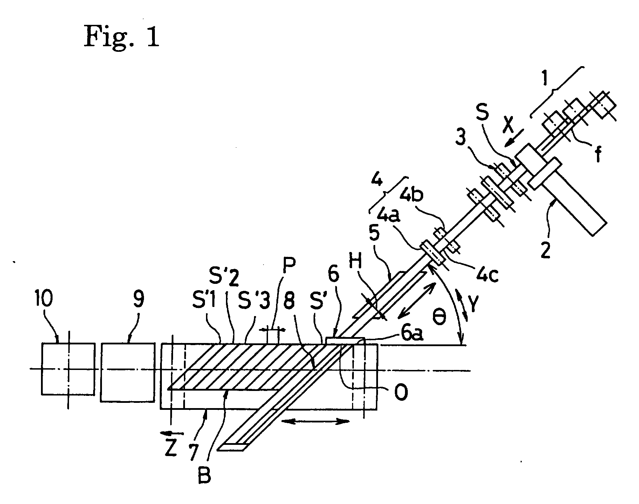

Fig. 1 shows a production apparatus for working a production method of a belt member according to the present invention. In Fig. 1, reference numeral 1 denotes a creel stand for supplying a plurality of reinforcing cords f of steel cords. Reference numeral 2 denotes a rubber covering apparatus for covering the reinforcing cords f with rubber to form a strip material S. Reference numeral 3 denotes a pull-out apparatus for pulling out the strip material S. Reference numeral 4 denotes a festooner that allows the strip material S to be held back temporarily. Reference numeral 5 denotes a standard-length feeder for intermittently feeding the strip material S. Reference numeral 6 denotes a cutter for cutting the strip material S at a predetermined cut angle. These apparatuses are disposed substantially in alignment with one another.

A conveyor 7 capable of rotating both normally and in reverse is disposed in a direction crosswise to the direction of the arrangement of the apparatuses described above to accept a large number of strip pieces S' that are cut to a standard length. An arranging/splicing apparatus 8 is installed on the conveyor 7 to splice and couple the strip pieces S', that are arranged, along the longitudinal direction.

A belt shaping drum 10 is disposed on the output side of the conveyor 7 to wind the belt member B in the length corresponding to one tire using an intermediate conveyor 9.

The creel stand 1 supports turnably a plurality of reels that take up the reinforcing cords f. The rubber covering apparatus 2 aligns a plurality of reinforcing cords f pulled out from the creel stand 1 in parallel in a predetermined pitch, extrudes unvulcanized rubber and covers the reinforcing cords f with the rubber. In this way, the strip material S, that has a parallelogramic cross section tapered at both end portions thereof in the width-wise direction and a predetermined width, can be shaped continuously. The width H of the strip material S is 5 to 60 mm, preferably 10 to 30 mm.

The pull-out apparatus 3 is connected to the covering apparatus 2. The pull-out apparatus 3 continuously delivers the reinforcing cords f from the creel stand 1, and also pulls out the strip material S shaped by the rubber covering apparatus 2 in a direction indicated by arrow X in the drawing.

The festooner 4 is connected to the pulled-out apparatus 3. The festooner 4 is disposed to absorb the difference of the speed between the continuous pull-out speed of the pull-out apparatus 3 and the intermittent feeding speed of the standard-length feeder 5. The festooner 4 drives and controls a pair of rollers 4a and 4b on the basis of the quantity of the strip material S to be held back, and allows this excessive strip material S to stay temporarily in a loop form in the space portion 4c that is defined between the rollers 4a and 4b.

The standard-length feeder 5 is connected to the festooner 4 through a free roller conveyor. The standard-length feeder 5 intermittently feeds the strip materials S for a predetermined length in match with the belt width. The standard-length feeder 5 is so constituted as to be capable of turning and moving to both sides with a position O on the cutting line 6a on the cutter 6 side as the pivoting center, as indicated by arrow Y.

The cutter 6 cuts the strip materials S that are fed by the standard-length feeder 5 for the predetermined length to the conveyor 7 side at a predetermined cut angle θ relative to the conveying direction, to serially form a plurality of strip pieces S'. The strip materials S are cut to a predetermined length in parallel with the conveying direction of the conveyor 7.

The conveyor 7 operates alternately and in synchronism with the standard-length feeder 5. The conveyor 7 is so constituted as to intermittently convey the strip pieces S' towards the shaping drum 10 for the predetermined length. The conveyor 7 conveys also the belt member B shaped from a plurality of strip pieces S' to the shaping drum 10 in the conveying direction Z.

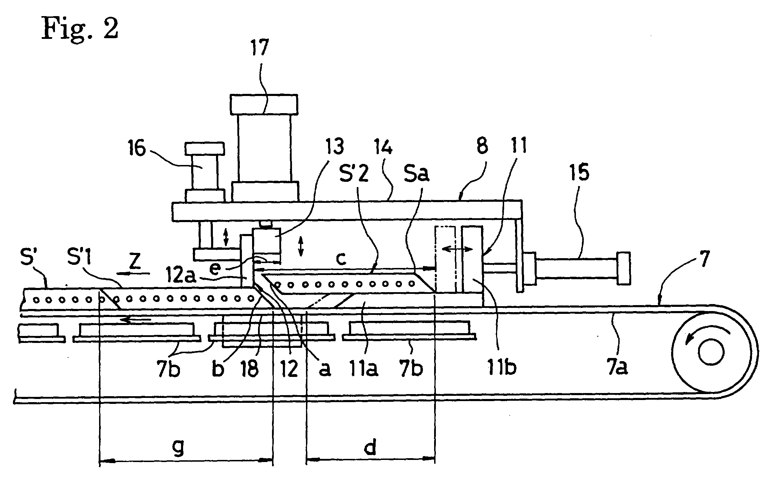

The arranging/splicing apparatus 8 includes a first guide 11 having a bottom plate 11a for supporting the rear edge side of the strip material S and a side plate 11b for limiting the position of the rear edge side of the strip material S, and a second guide 12 having a side plate 12a for limiting the position on the front edge side of the strip material S as shown in Fig. 2.

The first guide 11 is allowed to move back and forth in a direction prependicular to the side plate 11b by the operation of a cylinder 15 that is fitted to a support frame 14. The second guide 12 is allowed to move up and down by the operation of a cylinder 16 fitted to the support frame 14.

A splicing press 13 for attaching the strip pieces by pressing them together is interposed between the first guide 11 and the second guide 12. The splicing press 13 is allowed to move up and down along the side plate 12a of the second guide 12 by the operation of the cylinder 17 mounted to the support frame 14. A press cradle 18 is disposed at a position corresponding to the position of the splicing press 13 inside the conveyor belt 7a of the conveyor 7.

In the arranging/splicing apparatus 8, the distance c between the side plates 11b and 12a is equal to, or somewhat greater than, the total width g of the strip material S. The sum d + e of the width d of the bottom plate 11a and the width e of the splicing press 13 is preferably equal to, or somewhat smaller than, the total width g of the strip material S.

When the cut angle θ of the cutter 6 is changed by turning and moving the standard-length feeder 5, the support frame 14 turns and moves with the position O on the cutting line 6a of the cutter 6 as the pivot. In this instance, the extension direction of the guides 11 and 12 and the splicing press 13 crossing transversely the conveyor 7 is always in agreement with the feeding direction of the standard-length feeder 5.

Next, the production method of a belt member according to the present invention will be explained. First, a plurality of reinforcing cords f are continuously pulled out from the reel supported by the creel stand 1 by the tractive force of the pull-out apparatus 3. The reinforcing cords f are then covered with the unvulcanized rubber in the rubber covering apparatus 2, giving the strip materials S having a parallelogramic cross sectional shape and a predetermined width.

The strip material S shaped to a predetermined width is sent from the pull-out apparatus 3 to the festooner 4 and is held there temporarily. Next, the strip material S is conveyed intermittently and in a predetermined length to the conveyor 7 by the standard length feeder 5. At this time, the standard-length feeder 5 transfers the strip material S from the cutting position 6a of the cutter 6 to the conveyor 7 for a predetermined length corresponding to the belt width of the strip material S.

The end portion Sa of the strip material S conveyed by the standard-length feeder 5 to the conveyor 7 moves on the bottom plate 11a while it is guided by the side plate 11b of the first guide 11 and by the side plate 12a of the second guide 12. The strip material is then conveyed without allowing position error or bending deformation to occur on the bottom plate 11a.

Subsequently, the distal end portion Sa of the strip material S is cut at the cut angle θ by the cutter 6. When cutting is completed, the splicing press 13 lowers, presses the edge portion of the cut strip piece S'1 which is the front edge in the conveying direction (left-hand end portion) onto the conveyor belt 7a and clamps it between the splicing press 13 and the conveyor belt 7a. At this time, the first guide 11 moves back and places the strip piece S'1 on the conveyor belt 7a. The strip piece S'1 is attracted magnetically by a magnet 7b and is held on the conveyor belt 7a.

When the strip piece S'1 is placed on the conveyor belt 7a, the splicing press 13 moves up to a stand-by position shown in Fig. 2. In the mean time, the second guide 12 moves up to a stand-by position above.

Next, the conveyor 7 starts operating and conveys the strip piece S'1 put on the conveyor belt 7a towards the shaping drum 10 by the same feed distance as the length P of the cut face inclined at the cut angle θ. After conveying, the second guide 12 lowers to the guide position shown in Fig. 2 while the first guide 11 moves forth to the guide position shown in Fig. 2.

When both guides 11 and 12 move to the respective guide positions, the standard-length feeder 5 feeds again the end portion of the strip material S for the standard length from the cut position 6a towards the conveyor 7, guided by the first and second guides 11 and 12. The cutter 6 cuts the end portion of the strip material S to the standard length to give the strip piece S'2.

Next, the splicing press 13 lowers, and presses the edge portion of the strip piece S'2 which is the front edge in the conveying direction. In this instance, since the previous strip piece S'1 has been conveyed on the conveyor belt 7a towards the shaping drum 10 by the same distance as the length of the cut face, the front edge face a of the strip piece S'2 having the parallelogramic sectional shape is butted against the rear end face b of the previous strip piece S'1 in the conveying direction, and the strip pieces are pressed and spliced to each other.

After bonding is thus completed, the first guide 11 keeps its guide position while the splicing press 13 and the second guide 12 move up to their stand-by positions. Then the strip pieces S'1 and S'2, that are so spliced, are conveyed towards the shaping drum 10 on the conveyor belt 7a by the same feeding distance as the length P of their cut face in the same way as described above. When the second guide 12 moves to the guide position, the standard-length feeder 5 again feeds the strip material S between the first and second guides 11 and 12. Thereafter, the process steps of standard-length cutting, splicing and standard-length feeding are repeatedly carried out, and the strip pieces are serially spliced in the conveying direction on the conveyor belt 7a of the conveyor 7. In this way, there is produced the belt member B having a circumferential length L of a tire comprising an integer number of strip pieces S'1, S'2, S'3 and so forth, having the same width.

The belt member B spliced to be the length of one tire is as such sent to the belt shaping drum 10 and is wound on the outer circumference of the drum. As the front edge portion of the belt member B is spliced to its rear end portion, a ring-like endless belt is formed.

Next, when the cord angle as one of the specification items of the belt member B is changed, the cut angle θ of the strip material S is changed. In this instance, the initial end portion Sa of the strip material S that serves as the first strip piece S'1 is left cut at the cutting angle that is based on the previous specification. Therefore, it must be cut at the cut angle on the basis of the new specification.

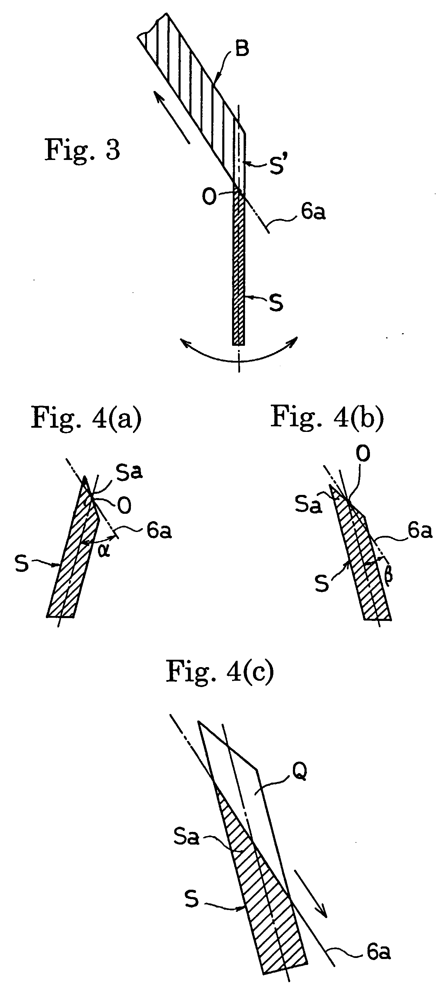

The cut angle θ of the strip material S can be changed by turning the strip material S from the reference position with its position O on the cut line 6a as the center shown in Fig. 3. When the cut angle of the strip material S is increased from the reference position to an angle α, the initial end portion Sa of the strip material S does not coincide with the cut line 6a as shown in Fig. 4(a). When the cut angle of the strip material S is decreased from the reference position to an angle β, the initial end portion Sa of the strip material S does not coincide with the cut line 6a as shown in Fig. 4(b). It will be assumed hereby that the cut angle α shown in Fig. 4(a) is the first specification and the cut angle β shown in Fig. 4(b) is the second specification. Then, when the first specification is changed to the second specification, a fragment Q must be cut off as a cut waste from the initial end portion Sa of the strip material S by the cutter 6 so as to meet the second specification as shown in Fig. 4 (C).

If the cut waste Q remains on the conveyor 7 and is supplied with the belt member B to the belt shaping drum 10, it affects adversely tire quality. Therefore, the cut waste Q on the conveyor 7 must be removed.

To prevent reliably the cut waste Q generated when the cut angle is changed from remaining at the splicing position on the conveyor 7, the conveyor 7 is driven to transfer the cut waste Q of the strip material S from the splicing position to other arbitrary position. The cut waste Q is then caused to fall from the conveyor 7, or an operator removes the cut waste Q from the conveyor 7. Alternatively, a robot can be used as a cut waste removing means in order to remove the cut waste Q. In this way, the cut waste Q generated at the time of the change of the cut angle of the strip material S can be removed efficiently and reliably from the splicing position, and the problem of deterioration of tire quality resulting from the cut waste Q can be solved. As a result, tire quality can be improved while its productivity is improved.

In the production apparatus of the belt member described above, the conveyor 7 can rotate both normally and in reverse. Therefore, it is advisable to convey the strip piece S' by the normal driving of the conveyor 7 and to drive the conveyor 7 in reverse until the cut waste Q falls down from the conveyor 7. In other words, the strip piece S' is transferred towards the shaping drum 10 along the conveying direction Z while the cut waste Q is caused to fall by being moved in the opposite direction of the conveying direction Z. In this way, the time required for removing the cut waste Q can be shortened and moreover, mixing of the cut waste Q into the belt member B can be prevented reliably.

## Claims

1. A method of producing an elongated belt member by the steps of cutting a continuous strip material to a predetermined length to form a plurality of strip pieces, moving intermittently said strip pieces on a conveyor in a direction crosswise to the conveying direction of said strip material, and splicing serially said strip pieces which have been appropriately arranged on said conveyor:
wherein an initial end portion of said strip material is cut when the cutting angle of said strip material is changed, and a cut waste formed at the time of cutting of said initial end portion is removed from the splicing position on said conveyor by driving said conveyor.

2. A method of producing a belt member according to claim 1, wherein said conveyor is so constituted as to be capable of rotating both normally and in reverse, transfer of said strip pieces is effected by normal driving of said conveyor, and removal of said cut waste is effected by reverse driving of said conveyor.

3. An apparatus for producing a belt member including a cutter for cutting with bias an elongated strip material, a conveyor for conveying a plurality of strip pieces cut from said strip material in a direction
